# EUROPÄISCHE PATENTANMELDUNG

(11) **EP 2 289 612 A1**
(43) Veröffentlichungstag der Anmeldung: **02.03.2011**
(21) Anmeldenummer: 09009728.8
(22) Anmeldetag: 28.07.2009
(51) Int. Cl.: B01D 63/16, B01D 33/21

(54) **Drehmembranfiltervorrichtung zur Abwasseraufbereitung**

(71) Anmelder: UWA Umwelt - Wasser - Abwasser GmbH & Co. KG, 32425 Minden (DE)
(72) Erfinder: Fritsch, Stephan, 33106 Paderborn (DE); Ittig, Manfred, 31535 Neustadt am Rübenberge (DE)
(74) Vertreter: Rolf, Gudrun

(57) **Zusammenfassung**

Es wird eine Drehmembranfiltervorrichtung zur Abwasseraufbereitung mit in einem Reaktorbecken (2) um eine horizontale Achse drehbar gelagerten Drehmembranfilter (1) aus einem Modultragrohr (3) mit Filtersegmenten (4), einem Drehantrieb (5), einer im Bereich der Achse vorgesehenen koaxialen Luftzuführung durch ein Belüftungsrohr (6) und Belüftungskerzen (7) sowie mit einem koaxialen Permeatabzug (8) auf der gegenüberliegenden Seite des Drehmembranfilters (1) zur Verfügung gestellt, die einen verschleißfreien Antrieb und eine optimierte Lastabtragung des Eigengewichts des Drehmembranfilters aufweist, was dadurch erzielt wird, dass das Modultragrohr (3) endseitige Wellenlager (9) aufweist, die dessen Eigengewicht unmittelbar auf Teile des Reaktorbeckens (2) übertragen und der Drehantrieb (5) über eine axiale Antriebswelle (10) erfolgt, die sich von außerhalb des Reaktorbeckens (2) durch ein ortsfestes Belüftungsrohr (6) für die Druckluftzuführung durch die Beckenwand (12) des Reaktorbeckens (2) bis in das Modultragrohr (3) erstreckt.

## Beschreibung

Die Erfindung betrifft eine Drehmembranfiltervorrichtung zur Abwasseraufbereitung gemäß dem Oberbegriff des ersten Patentanspruches.

Es ist eine Filtervorrichtung bekannt, EP 1 583 597 B9, die ein Reaktorbecken mit einem um eine horizontale Achse darin drehbar gelagerten Membranfilter mit Filtersegmenten aufweist, sowie einen Drehantrieb, eine im Bereich der Achse vorgesehenen koaxialen Druckluftzuführung durch ein Belüftungsrohr und einen ebenfalls koaxialen Permeatabzug auf der gegenüberliegenden Seite des Drehmembranfilters. Bei dieser vorbekannten Filtereinrichtung erfolgt der Drehantrieb über ein oberhalb des Wasserspiegels angeordneten Elektromotor, der den Membranfilter über einen Kettentrieb um seine horizontale Drehachse in Drehung versetzt, so dass dieser Kettentrieb in Abhängigkeit von dem Verschmutzungsgrad des Abwasser einem hohen Verschleiß unterliegt. Des Weiteren ist bei diesem vorbekannten Stand der Technik das Gesamtgewicht des Drehmembranfilters auf einer feststehenden Hohlwelle abgestützt, die ihrerseits mittelbar im Reaktorbecken gelagert ist.

Aufgabe der Erfindung ist es, eine Drehmembranfiltervorrichtung zur Verfügung zu stellen, die einen verschleißfreien Antrieb und eine optimierte Lastabtragung des Eigengewichts des Drehmembranfilters aufweist.

Die Lösung dieser Aufgabe erfolgt in Verbindung mit den Merkmalen des Oberbegriffes in Verbindung mit den technischen Merkmalen des kennzeichnenden Teils des ersten Patentanspruches insbesondere dadurch, dass das Modultragrohr des Drehmembranfilters endseitige Wellenlager aufweist, die dessen Eigengewicht unmittelbar auf Teile des Reaktorbeckens übertragen und dass der Drehantrieb über eine axiale Antriebswelle erfolgt, die sich von außerhalb des Reaktorbeckens durch ein ortsfestes Belüftungsrohr für die Druckluftzuführung durch die Beckenwand hindurch bis zum Modultragrohr erstreckt.

Diese vorteilhafte Ausgestaltung des Gegenstandes der Erfindung erlaubt eine doppelte frei drehende Lagerung des Modultragrohres sowie eine vollkommene Entkoppelung des lastabtragenden Modultragrohres von dem so vollkommen lastfrei gestellten Belüftungsrohr. Der axiale Drehantrieb kann des Weiteren ohne Kraftverluste in Folge einer Umlenkung erfolgen sowie ohne Ketten oder Riemen, die in dass aufzubereitende Medium eintauchen müssten, wodurch sich auch der Verschleiß der am Antrieb beteiligten Bauteile drastisch verringert.

Weitere vorteilhafte Ausgestaltungen des Gegenstandes der Erfindung ergeben sich mit und in Kombination aus den nachfolgenden Unteranspürchen.

Gemäß einer besonderes bevorzugten Ausführungsform des Gegenstandes der Erfindung ist zwischen dem feststehenden Teil des Belüfterrohres der Druckluftzuführung und einem mitdrehenden Teil des Belüfterrohres ein Rohrdrehgelenk eingesetzt, ebenso wie zwischen dem feststehenden Teil eines Hohlrohres des Permeatabzuges und dessen mitdrehenden Teils, so dass keinerlei Torsionskräfte auf die feststehenden Teile des Belüftungsrohres und des Permeatabzuges übertragen werden. Des Weiteren führt das in axialer drehender Anordnung ausgeführte Belüftungsrohr zu einer gleichmäßigen idealen Luftverteilung innerhalb der Vorrichtung.

Der ortsfeste Teil des Belüfterrohres ist zudem mittels einer Ringraumabdichtung in der Durchgangsöffnung der Beckenwand des Reaktorbeckens abgedichtet gelagert, wobei sich durch die innerhalb des Belüfterrohres hindurch geführte Antriebswelle deren Abdichtung vollkommen erübrigt.

Die Beckenwand des Reaktorbeckens wird also nur von einem Bauteil, nämlich dem Belüftungsrohr, durchdrungen und ist auf Grund der vorteilhaften Konstruktion im wesentlichen belastungsfrei, so dass sich die Wanddurchdringung über eine bekannte Ringraumdichtung auf Dauer wartungsfrei abdichten lässt.

Entsprechend einer weiteren bevorzugten Ausführungsform der Erfindung sind die Wellenlager des Modultragrohres auf Betonsockeln angeordnet, die sich bis zum Beckenboden und bis zur Beckenwand erstrecken und so ein massives Fundament zur Abstützung der Vertikallasten darstellen. Vorteilhafterweise ist auch der außerhalb des Reaktorbeckens angeordnete Drehantrieb auf einem solchen Betonsockel gelagert.

Bei einer vorteilhaften Ausgestaltung des Gegenstandes der Erfindung sind die Belüfterkerzen außerhalb der Mantelfläche des Modultragrohres angeordnet und auf diese Weise mitdrehend ausgeführt, wodurch die Membranflächenreinigung auf Grund der Drehbewegung durch Scherkräften und durch die intensive und unmittelbare Belüftung weiter optimiert ist. Vorteilhaft ist hierbei des Weiteren, dass das Modultragrohr selber keine Schwächungen etwa durch eingebrachte Belüftungslochungen aufweist.

Die mitdrehenden Belüfterkerzen sind stattdessen mit einer lösbaren Vorrichtung an den Enden von Luftabzweigern angeordnet, die sich radial durch das Modultragrohr erstrecken und im Durchtrittsbereich mit diesem verschweißt sind, so dass die Luftabzweiger zusätzlich auch die Wirkung von Speichen aufweisen, über die gleichzeitig die Lastübertragung der zentrischen Welle auf das Modultragrohr erfolgt. Diese bevorzugt koaxial zum zentralen Belüftungsrohr angeordneten Belüfterkerzen sind vorteilhafterweise über den Umfang des Modultragrohres und zueinander versetzt angeordnet und so nach Abnahme eines oder mehrerer Filtersegmente von außen sehr gut erreichbar, wodurch sich die Wartung des Drehmembranfilters wesentlich vereinfacht, ebenso wie die Montagefreundlichkeit deutlich optimiert ist.

Vorteilhaft ist des Weiteren eine Ausführungsform der Erfindung, bei der zur Schwingungsaufnahme Gummikompensatoren zwischen den Rohrdrehgelenken und den Wellenlagern 9 angeordnet sind, so dass Bewegungen, Vibrationen oder ein leichter Winkelversatz zulässig sind, ohne eine belastende oder abscherende Wirkung auf die Wellenlager oder das Modultragrohr zu übertragen.

Die direkte vertikale Lastabtragung über die Betonsockel hat den weiteren Vorteil, dass auf die Konstruktion separater Gestelle oder Edelstahlkonstruktionen verzichtet werden kann.

Ein besonders vorteilhaftes Merkmal der erfinderischen Drehmembranfiltervorrichtung besteht darin, dass die Belüfterkerzen unmittelbar unter den Filterelementen angeordnet sind, wobei jedem Filterelement mindestens eine Belüfterkerze zugeordnet ist, so dass eine direkt Lufteinperlung zwischen die Membranflächen erfolgen kann, ohne das die feinen Luftblasen störende Metalleinbauten passieren müssten, wobei sich die feinen Luftbläschen zu gröberen Luftblasen zusammenschließen können, was hier folgerichtig ausgeschlossen ist, so dass sich ein optimales Luftblasenbild im Reaktor einstellt und dadurch eine ideale Abreinigung von Belägen auf den Membranscheiben erzeugt werden kann.

Nachfolgend ist ein Ausführungsbeispiel der Erfindung anhand von Zeichnungen näher beschrieben. Es zeigen:

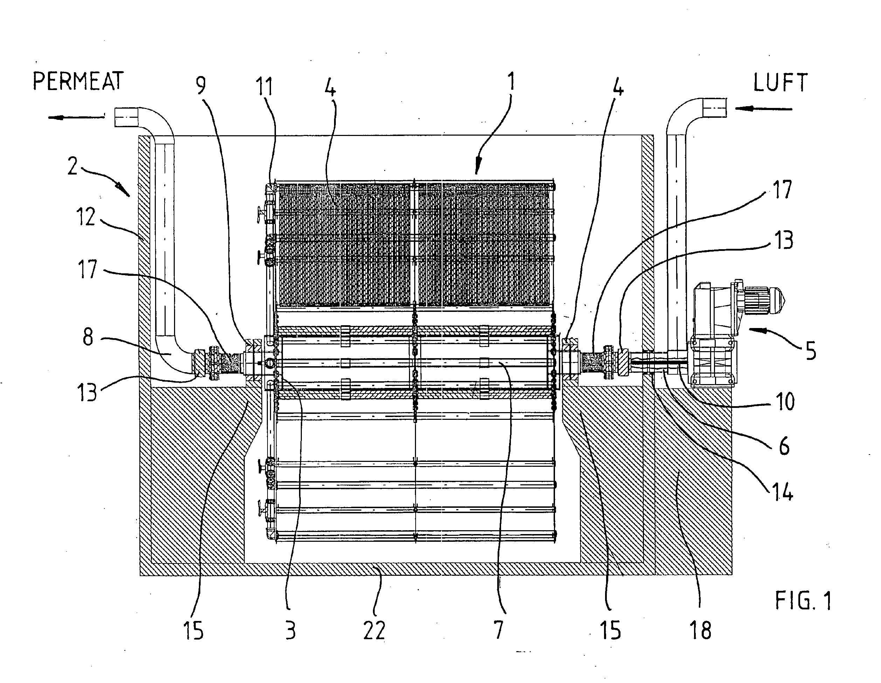

- Fig. 1: eine geschnittene Ansicht durch eine Drehmembranfiltervorrichtung,

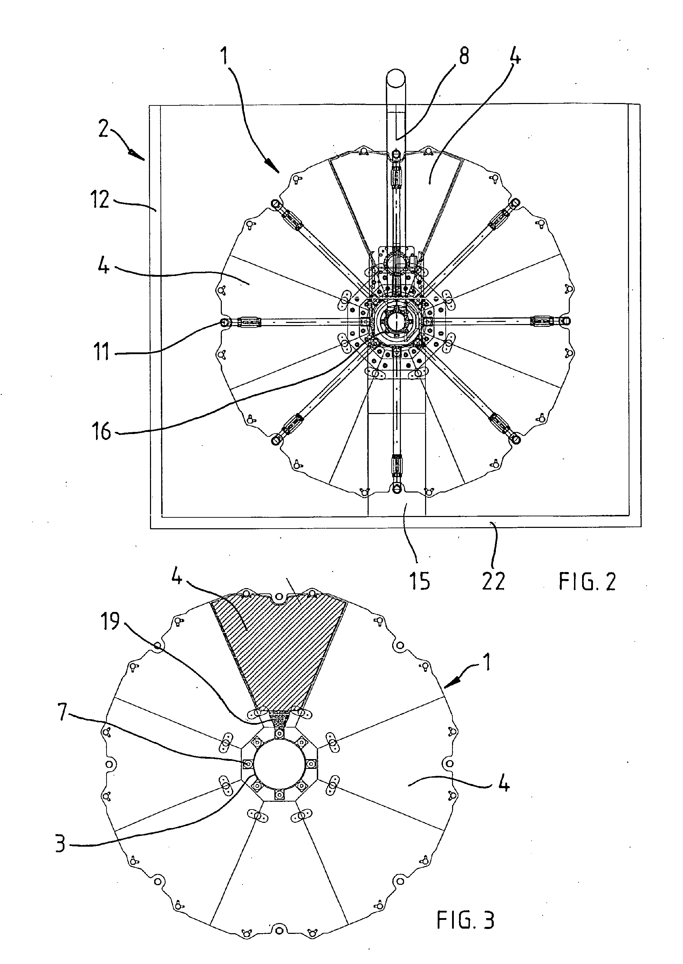

- Fig. 2: eine Seitenansicht der Membranfiltervorrichtung gem. Fig. 1 und
- Fig. 3: eine Seitenansicht eines Drehmembranfilters.

Die Drehmembranfiltervorrichtung zur Abwasseraufbereitung besteht aus einem Reaktorbecken 2 mit Beckenwänden 12 und einem Beckenboden 22 sowie darin angeordneten Betonsockeln 15 zur Aufnahme der Gewichtskräfte des Drehmembranfilters 1 und aus einem außerhalb des Reaktorbeckens 2 angeordneten Betonsockel 18 zur Lagerung des Drehantriebes 5 für den Drehmembranfilter 1.

Der Drehmembranfilter 1 weist ein Modultragrohr 3 auf, welches über beidseitige Wellenlager 9 auf den Betonsockeln 15 abgestützt ist. Über den Umfang des Modultragrohres 3 sind Filtersegmente 4 angeordnet, durch deren Membranflächen das Filtrat in eine Permeatabzugleitung 8 abgesaugt wird und die Membranflächen durch die Drehung des Membranfilters 1 in dem zu klärenden Medium und durch um das Modultragrohr 3 angeordnete Belüfterkerzen 7 ausperlende Luftbläschen, insgesamt also durch Scherkräfte des Wassers und Spüleffekte der Lufteinperlung, gereinigt werden.

Die Luftzufuhr erfolgt über einen zeichnerisch nicht dargestellten Kompressor und ein Belüftungsrohr 6, welches sich in Höhe der Antriebswelle 10 des Drehantriebes 5 horizontal durch eine Ausnehmung in der Beckenwand 12 des Reaktorbeckens 2 erstreckt, welches dort über eine Ringraumdichtung 14 abgedichtet ist. Kurz hinter der Wanddurchführung ist ein Rohrdrehgelenk 13 vorgesehen sowie ein Gummikompensator 17, der einen geringfügigen Winkel- und Längenversatz der Bauteile ausgleicht und einen kräftefreien Anschluss des mitdrehenden Teils des Belüftungsrohres 6 gewährleistet.

Auf der gegenüberliegenden Seite des Drehmembranfilters 1 ist der Permeatabzug 8 ähnlich wie die Druckluftzufuhr über einen Gummikompensator 7 und ein Rohrdrehgelenk 13 an den feststehenden Teil des Permeatabzuges 8 angeschlossen.

Die von dem Drehantrieb 5 angetriebene Antriebswelle 10 erstreckt sich durch die Belüfterleitung 6 hindurch bis in das Modultragrohr 3 und überträgt die Drehbewegung über einen luftdurchlässigen Antriebsstern und von der Belüfterleitung 6 abgehenden Luftabzweigern 16, die eine Art hohler Speichen für das Modultragrohr 3 bilden, auf die koaxial außerhalb der Mantelfläche des Modultragrohrs 3 angeordneten Belüfterkerzen 7, welche über zeichnerisch nicht dargestellte Rastverbindungen daran festgelegt sind.

## Patentansprüche

1. Drehmembranfiltervorrichtung zur Abwasseraufbereitung mit in einem Reaktorbecken (2) um eine horizontale Achse drehbar gelagerten Drehmembranfilter (1) aus einem Modultragrohr (3) mit Filtersegmenten (4), einem Drehantrieb (5), einer im Bereich der Achse vorgesehenen koaxialen Druckluftzuführung durch ein Belüftungsrohr (6) und Belüftungskerzen (7) sowie mit einem koaxialen Permeatabzug (8) auf der gegenüberliegenden Seite des Drehmembranfilters (1), **dadurch gekennzeichnet, dass** das Modultragrohr (3) endseitige Wellenlager (9) aufweist, die dessen Eigengewicht unmittelbar auf Teile des Reaktorbeckens (2) übertragen und dass der Drehantrieb (5) über eine axiale Antriebswelle (10) erfolgt, die sich von außerhalb des Reaktorbeckens (2) durch ein ortsfestes Belüftungsrohr (6) für die Druckluftzuführung durch die Beckenwand (12) des Reaktorbeckens (2) bis in das Modultragrohr (3) erstreckt.

2. Drehmembranfiltervorrichtung nach Anspruch 1, **dadurch gekennzeichnet, dass** zwischen dem feststehenden Teil des Belüfterrohres (6) der Druckluftzuführung und einem mitdrehenden Teil des Belüftungsrohres (6) ein Rohrdrehgelenk (13) eingesetzt ist.

3. Drehmembranfiltervorrichtung nach einem der vorgenannten Ansprüche, **dadurch gekennzeichnet, dass** zwischen dem feststehenden Teil eines Hohlrohres des Permeatabzuges (8) und einem mitdrehenden Teil des Hohlrohres ein Rohrdrehgelenk (13) eingesetzt ist.

4. Drehmembranfiltervorrichtung nach einem der vorgenannten Ansprüche, **dadurch gekennzeichnet, dass** der ortsfeste Teil des Belüfterrohres (6) der Druckluftzuführung mittels einer Ringraumdichtung (14) in einer Durchgangsöffnung in der Beckenwand (12) des Reaktorbeckens (2) abgedichtet ist.

5. Drehmembranfiltervorrichtung nach einem der vorgenannten Ansprüche, **dadurch gekennzeichnet, dass** die Wellenlager (9) auf Betonsockeln (15) angeordnet sind, die sich unmittelbar auf dem Beckenboden (22) und/ oder an der Beckenwand (12) abstützen.

6. Drehmembranfiltervorrichtung nach einem der vorgenannten Ansprüche, **dadurch gekennzeichnet, dass** sie außerhalb einer Mantelfläche des Modultragrohres (3) mit diesem mitdrehende Belüfterkerzen (7) aufweist.

7. Drehmembranfiltervorrichtung nach einem der vorgenannten Ansprüche, **dadurch gekennzeichnet, dass** die Belüfterkerzen (7) mit einer lösbaren Rastvorrichtung auf den Enden von Luftabzweigern (16) angeordnet sind, die sich radial durch das Modultragrohr (3) erstrecken.

8. Drehmembranfiltervorrichtung nach einem der vorgenannten Ansprüche, **dadurch gekennzeichnet, dass** die Belüfterkerzen (7) koaxial zum zentralen Belüftungsrohr (6) und über den Umfang des Modultragrohres (3) zueinander versetzt angeordnet sind.

9. Drehmembranfiltervorrichtung nach einem der vorgenannten Ansprüche, **dadurch gekennzeichnet, dass** das Modultragrohr (3) endseitig mit Gummikompensatoren (17) ausgestattet ist.

10. Drehmembranfiltervorrichtung nach einem der vorgenannten Ansprüche, **dadurch gekennzeichnet, dass** die Belüfterkerzen (7) unmittelbar unter den Filtersegmenten (4) angeordnet sind und jedem Filtersegment (4) mindestens eine Belüfterkerze (7) zugeordnet ist.
